# EUROPEAN PATENT APPLICATION

(11) **EP 4 746 174 A1**
(43) Date of publication of application: **20.05.2026**
(21) Application number: 24852982.8
(22) Date of filing: 26.11.2024
(51) Int. Cl.: H01M 50/46, H01M 50/403, H01M 10/0583, H01M 10/052, H01M 10/04, H01M 10/058

(54) **STACKED BATTERY CELL, AND FABRICATION APPARATUS AND METHOD THEREFOR**

(30) Priority: 30.09.2024 CN 202422416488 U; 30.09.2024 CN 202411389163
(71) Applicant: Eve Energy Co., Ltd., Huizhou, Guangdong 516006 (CN); Eve Power Co., Ltd., Jingmen, Hubei 448000 (CN); Eve Energy Storage Co., Ltd, Wuhan, Hubei 430074 (CN)
(72) Inventor: LIU, Jianhua, Huizhou, Guangdong 516006 (CN); YANG, Xin, Huizhou, Guangdong 516006 (CN); CHEN, Liquan, Huizhou, Guangdong 516006 (CN); SU, Bin, Huizhou, Guangdong 516006 (CN)
(74) Representative: Berggren Oy
(86) International application number: PCT/CN2024/134538
(87) International publication number: WO 2026/065718

(57) **Abstract**

A laminated battery cell and a preparation device and method thereof are provided. The laminated battery cell is prepared by folding a battery cell structure. The battery cell structure includes one or more first electrode sheets, one or more separators and one or more second electrode sheets. The one or more first electrode sheets are located on and connected to a side of the one or more separators by a normal temperature and pressure conductive adhesive. A plurality of second electrode sheets are alternately arranged on and connected to a side of the one or more separators facing away from the one or more first electrode sheets by a normal temperature and pressure conductive adhesive. The normal temperature and pressure conductive adhesive has good adhesion and conductivity, improves the battery liquid absorption effect and interface conditions, and improves battery performance.

## Description

This application claims the priority to and benefit of Chinese Patent Application No. 202422416488.8 and Chinese Patent Application No. 202411389163.3, both of which are filed with China Patent Office on September 30, 2024, the entire contents of which are incorporated herein by reference.

### TECHNICAL FIELD

The present application is related to the technical field of battery processing, and in particular to a laminated battery cell and a preparation device and method thereof.

### BACKGROUND

The laminated cells of lithium batteries are prepared using a Z-shape laminating process, in which the positive electrode sheets, negative electrode sheets and separators are compounded through a thermal composite process and then laminated in a Z-shape to form a battery cell pack.

At present, the technology for compounding the electrode sheets and the separators is to coat the separators with a hot melt adhesive, and then bond the separators and the electrode sheets together through the adhesive by hot pressing. However, during the hot pressing process, the temperature of the composite roller exceeds 50 °C and the pressure needs to exceed 1.2T. Only under the action of high temperature and high pressure can the separators and the electrode sheets be pressed together.

### SUMMARY

However, the rubber particles on the separators will be flattened, resulting in a decrease in the air permeability of the separators, affecting the battery's liquid absorption effect. After full charge, the battery interface is prone to purple spots, black spots and other interface defects, resulting in poor battery performance.

In a first aspect, an embodiment of the present application provides a laminated battery cell, which is prepared by folding a battery cell structure, and the battery cell structure includes:
one or more first electrode sheets;
one or more separators, where the one or more first electrode sheets are arranged on a side of the one or more separators, and the one or more first electrode sheets and the one or more separators are connected to each other by a normal temperature and pressure conductive adhesive;
one or more second electrode sheets, arranged on a further side of the one or more separators facing away from the one or more first electrode sheets, and the one or more second electrode sheets are connected to the one or more separators by the normal temperature and pressure conductive adhesive.

In a second aspect, an embodiment of the present application provides a preparation device of a laminated battery cell, including:
a first electrode sheet preparation unit, configured to prepare a first electrode sheet;
a first glue spraying mechanism, arranged downstream of the first electrode sheet preparation unit and configured to spray a normal temperature and pressure conductive adhesive onto a surface of the first electrode sheet;
a separator unwinding mechanism, arranged downstream of the first glue spraying mechanism and is arranged to convey the separator;
a first composite mechanism, arranged downstream of the separator unwinding mechanism, and including two first pressure rollers arranged opposite to each other, where after the first electrode sheet and the separator pass through between the first pressure rollers, a first composite tape is prepared, and the pressure applied by the first pressure rollers is P1, where 0.05T ≤ P1 ≤ 0.1T;
a second electrode sheet preparation unit, arranged downstream of the first composite mechanism and configured to prepare a second electrode sheet;
a second glue spraying mechanism, arranged downstream of the second electrode sheet preparation unit and is configured to spray the normal temperature and pressure conductive adhesive onto a surface of the second electrode sheet to be connected to the first composite tape;
a second composite mechanism, arranged downstream of the second glue spraying mechanism, and includes two second pressure rollers arranged opposite to each other, where the first composite tape and the second electrode sheet pass through between the second pressure rollers to prepare a battery cell structure, and the pressure applied by the second pressure roller is P2, where 0.05T ≤ P2 ≤ 0.1T;
a folding mechanism, configured to fold the battery cell structure to prepare a laminated battery cell.

In a third aspect, the present application also provides a preparation method of a laminated battery cell, including the following steps of:
preparing one or more first electrode sheets and one or more second electrode sheets;
spraying a normal temperature and pressure conductive adhesive on both sides of the one or more first electrode sheets to compositely connect the one or more first electrode sheets with two separators; spraying a normal temperature and pressure conductive adhesive on a side surface of the one or more second electrode sheets to compositely connect the one or more second electrode sheets with a side of the separators facing away from the one or more first electrode sheets to prepare and obtain a battery cell structure;
folding the battery cell structure to prepare a laminated battery cell.

### BENEFICIAL EFFECT

The embodiments of the present application provide a laminated battery cell and a preparation device and method thereof. The laminated battery cell includes a first electrode sheet, a second electrode sheet and a separator. The first electrode sheet and the separator are compositely connected by a normal temperature and pressure conductive adhesive, and the second electrode sheet and the separator are compositely connected by the normal temperature and pressure conductive adhesive. The conductive adhesive under normal temperature and pressure has good adhesion properties, and also has good conductivity, which improves the poor battery performance caused by thermal composite of the electrode sheets and separator under high temperature and pressure during the processing of the laminated battery cell, improves the battery's liquid absorption effect and interface conditions, and improves the battery performance.

### BRIEF DESCRIPTION OF THE DRAWINGS

FIG. 1 is a cross-sectional schematic diagram of a first form of a laminated battery cell according to some embodiments of the present application.
FIG. 2 is a cross-sectional schematic diagram of a second form of a laminated battery cell according to some embodiments of the present application.
FIG. 3 is a cross-sectional schematic diagram of a third form of a laminated battery cell according to some embodiments of the present application.
FIG. 4 is a cross-sectional schematic diagram of a first form of a battery cell structure according to some embodiments of the present application.
FIG. 5 is a cross-sectional schematic diagram of a second form of a battery cell structure according to some embodiments of the present application.
FIG. 6 is a cross-sectional schematic diagram of a third form of a battery cell structure according to some embodiments of the present application.
FIG. 7 is a schematic diagram of preparation device of a laminated battery cell according to some embodiments of the present application.

### List of reference numerals:

10, laminated batter cell; 110, first electrode sheet; 120, separator; 121, first separator; 122, second separator; 130, second electrode sheet;
100, first electrode sheet preparation unit; 200, first glue spraying mechanism; 300, separator unwinding mechanism; 400, first composite mechanism; 410, first pressure roller; 500, second electrode sheet preparation unit; 600, second glue spraying mechanism; 700, second composite mechanism; 710, second pressure roller; 800, folding mechanism.

### DETAILED DESCRIPTION OF THE EMBODIMENTS

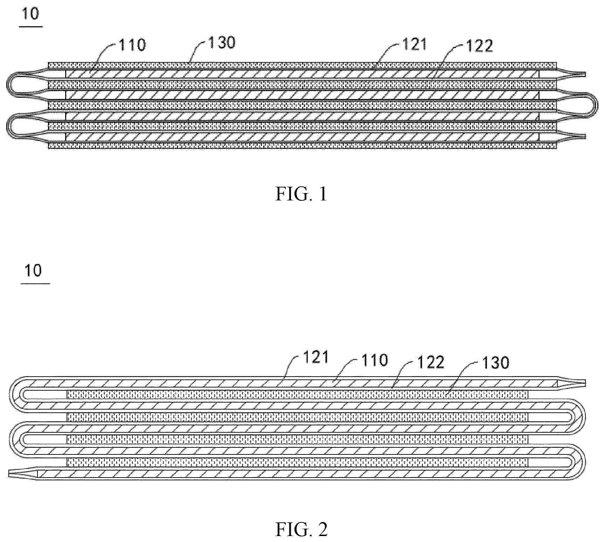

Referring to FIGs. 1 to 6, some embodiments of the present application provide a laminated battery cell 10, which is prepared by folding a battery cell structure, and the battery cell structure includes one or more first electrode sheet 110, one or more separators 120, and one or more second electrode sheet 130. The one or more first electrode sheets 110 are arranged on a side of each separator 120, and the one or more first electrode sheets 110 and the one or more separators 120 are connected by a normal temperature and pressure conductive adhesive. In some embodiments, the normal temperature and pressure conductive adhesive is PVDF-HFP (polyvinylidene fluoride-hexafluoropropylene). The one or more second electrode sheets 130 are arranged on a side of each separator 120 facing away from the one or more first electrode sheets 110, and the one or more second electrode sheets 130 and the one or more separators 120 are connected by a normal temperature and pressure conductive adhesive. The polarity of each first electrode sheet 110 is opposite to that of each second electrode sheet 130. Each first electrode sheet 110 is provided with a first tab, and each second electrode sheet 130 is provided with a second tab, and the first tab and the second tab extend out of each separator 120.

In some embodiments of the present application, each first electrode sheet 110 and each second electrode sheet 130 are connected to the corresponding separator(s) 120 by a normal temperature and pressure conductive adhesive. In the process of compounding each first electrode sheet 110, second electrode sheet 130 and separator 120, high temperature and high pressure are not needed. Under normal temperature and pressure (where the temperature is 25 °C, and the pressure is 1.01325 Pa), the one or more first electrode sheets 110 and the one or more second electrode sheets 130 can be bonded to the one or more separators 120, and the conductive performance is good. The processing process is simple, and the processing equipment investment is reduced.

In some embodiments, the normal temperature and pressure conductive adhesive is PVDF-HFP. PVDF-HFP has good cohesion and good adhesion effect at normal temperature and pressure. At room temperature (25 °C), the conductivity of PVDF-HFP is as high as 3.2 ms/cm, the electrochemical temperature window can reach 5V, the lithium ion migration number is 0.63, and it has good interfacial compatibility with lithium metal. This improves the cycle stability and safety of lithium batteries.

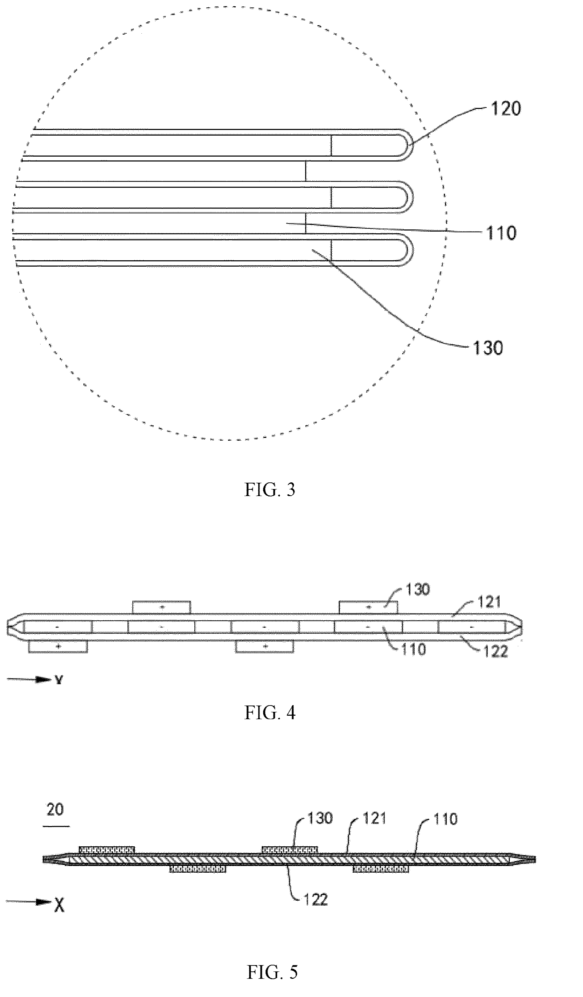

In some embodiments, referring to FIGs. 1 and 4, two layers of separators 120 are provided in the battery cell structure, which are a first separator 121 and a second separator 122, and the first separator 121 and the second separator 122 are arranged at intervals relative to each other. The first separator 121 and the second separator 122 both extend along a first direction. The first separator 121 and the second separator 122 have the same shape and size. The first electrode sheets 110 are located between the first separator 121 and the second separator 122. Along the first direction, the first electrode sheets 110 are arranged at intervals, and both sides of each first electrode sheet 110 are coated with a normal temperature and pressure conductive adhesive, a side of each first electrode sheet 110 is bonded to the first separator 121 by the normal temperature and pressure conductive adhesive, and the other side of the first electrode sheet 110 is bonded to the second separator 122 by the normal temperature and pressure conductive adhesive. Some of the second electrode sheets 130 are arranged on the side of the first separator 121 facing away from the first electrode sheet 110 and the rest of the second electrode sheets 130 are arranged on the side of the second separator 122 facing away from the first electrode sheet 110. Along the first direction, the second electrode sheets 130 on the side of the first separators 121 and the second electrode sheets 130 on the side of the second separators 122 are arranged alternately in sequence.

Exemplarily, referring to FIGs. 1 and 4, the first electrode sheets 110 and the second electrode sheets 130 are both single electrodes, and a plurality of first electrode sheets 110 are arranged at intervals along the first direction, and a plurality of second electrode sheets 130 are arranged at intervals along the first direction. The first electrode sheets 110 and the second electrode sheets 130 are arranged in alignment. The first direction is the X-axis direction. When the first electrode sheets 110 are negative electrode sheets, the second electrode sheets 130 are positive electrode sheets. When the first electrode sheets 110 are positive electrode sheets, the second electrode sheets 130 are negative electrode sheets.

Referring to FIGs. 4 and 5, adjacent negative electrode sheets are spaced a certain distance apart along the first direction. Both sides of each negative electrode sheet are coated with the normal temperature and pressure conductive adhesive, and the two sides of the negative electrode sheet are respectively bonded and connected to the first separator 121 and the second separator 122. A side of each positive electrode sheet is coated with the normal temperature and pressure conductive adhesive, and the positive electrode sheet is bonded and connected to the corresponding one of the separators 120 where the positive electrode sheet is bonded. Along the thickness direction of the negative electrode sheets, the negative electrode sheets and the positive electrode sheets are arranged in alignment. Both the positive electrode sheets and the negative electrode sheets are each have a rectangular sheet-like structure, the length dimension of each positive electrode sheet is smaller than the length dimension of each negative electrode sheet, and the width dimension of the positive electrode sheet is smaller than the width dimension of the negative electrode sheet. The projections of all negative electrode sheets in the separators 120 fall within the range of the separators 120.

In some embodiments, the first electrode sheets 110 are positive electrode sheets, and the second electrode sheets 130 are negative electrode sheets. Along the first direction, a plurality of positive electrode sheets are arranged in sequence and spaced apart. The number of the second electrode sheets 130 is two more than the number of the first electrode sheets 110. Along the thickness direction, the second electrode sheets 130 are arranged in alignment with the first electrode sheets 110, and the projections of the first electrode sheets 110 completely falls within the projection range of the second electrode sheets 130. The surfaces of both sides of each positive electrode sheet are sprayed with a normal temperature and pressure conductive adhesive, and the positive electrode sheet is bonded and connected with the first separator 121 and the second separator 122 on both sides. Some of the negative electrode sheets are arranged on the side of the first separator 121 facing away from the positive electrode sheets and the rest of the negative electrode sheets are arranged on the side of the second separator 122 facing away from the positive electrode sheet. Along the first direction, the negative electrode sheets on the side of the first separator 121 and the negative electrode sheets on the side of the second separator 122 are arranged alternately.

In some embodiments, the first electrode sheets 110 are negative electrodes, and the second electrode sheets 130 are positive electrodes.

Exemplarily, referring to FIGs. 2 and 5, adjacent negative electrode sheets are connected along the first direction. Multiple first electrode sheets 110 are connected to from a long strip-shaped structure, and thus the first electrode sheets 110 are continuous. The total size of the first electrode sheets 110 is smaller than the size of the separators 120. The projections of the first electrode sheets 110 on the separators 120 completely falls within the range of the separators 120. Both sides of each first electrode sheet 110 are coated with a normal temperature and pressure conductive adhesive, and the first electrode sheet 110 is bonded to the separators 120. Alternatively, the areas on the first electrode sheets 110 that are aligned with the second electrode sheets 130 are coated with a normal temperature and pressure conductive adhesive, and within the coating range, the first electrode sheets 110 is bonded to the separators 120. Along the first direction, the projections of the positive electrode sheets on the first separator 121 are arranged alternatively in sequence, and the distance between any adjacent positive electrode sheets is the same.

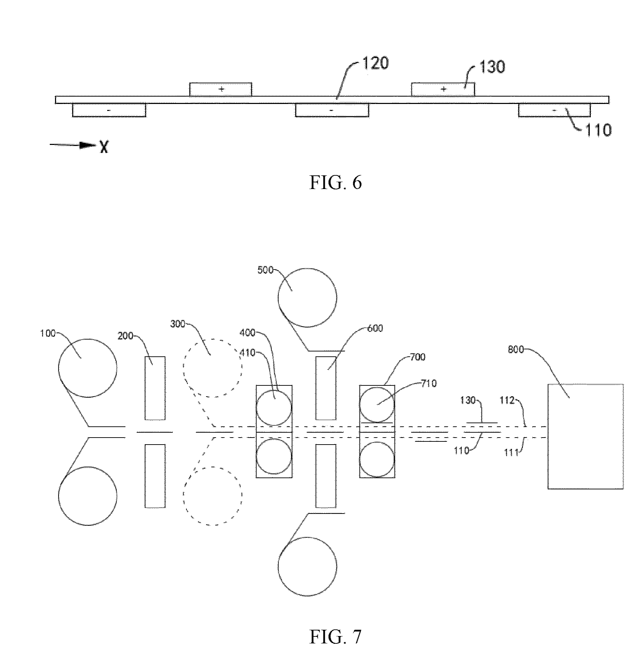

In some embodiments, referring to FIGs. 3 and 6, a plurality of first electrode sheets 110, one separator 120 and a plurality of second electrode sheets 130 are provided in the battery cell structure. The first electrode sheets 110 is located on a side of the separator 120, and the first electrode sheets 110 are arranged at intervals along the first direction, and the second electrode sheets 130 are located on the other side of the separator 120, and the second electrode sheets 130 are arranged at intervals along the first direction. Along the first direction, the first electrode sheets 110 and the second electrode sheets 130 are arranged alternately at intervals. A side of the first electrode sheets 110 is connected to a side of the separator 120 by a normal temperature and pressure conductive adhesive, and the second electrode sheets 130 are located on the other side of the separator 120, and a side of the second electrode sheets 130 is connected to the other side of the separators 120 by a normal temperature and pressure conductive adhesive.

Please refer to FIG. 7, an embodiment of the present application further provides a preparation device of a laminated battery cell, which includes a first electrode sheet preparation unit 100, a first glue spraying mechanism 200, a separator unwinding mechanism 300, a first composite mechanism 400, a second electrode sheet preparation unit 500, a second glue spraying mechanism 600, a second composite mechanism 700 and a folding mechanism 800 arranged in sequence along the production line.

In some embodiments, referring to FIG. 7, the first electrode sheet preparation unit 100 is configured to prepare the first electrode sheet 110. The first electrode sheet preparation unit 100 includes unwinding mechanisms and cutting mechanisms, and an electrode sheet material is wound on each unwinding mechanism. In the case that the first electrode sheet 110 is positive electrode sheet, a positive electrode sheet material is wound on the corresponding unwinding mechanisms. In the case that the first electrode sheet 110 is a negative electrode sheet, a negative electrode sheet material is wound on the corresponding unwinding mechanisms. The cutting mechanisms are each configured to cut the material into a plurality of first electrode sheets 110. In the case that the first electrode sheets 110 are positive electrode sheets, the cutting mechanisms are configured to cut out a plurality of positive electrode sheets. In the case that the first electrode sheets 110 are negative electrode sheets, the cutting mechanism are configured to cut out a plurality of negative electrode sheets or a continuous negative electrode sheet.

In some embodiments, referring to FIG. 7, the first glue spraying mechanism 200 is arranged downstream of the first electrode sheet preparation unit 100. The first glue spraying mechanism 200 is configured to spray a normal temperature and pressure conductive adhesive onto a surface of the first electrode sheet 110 connected to the separator 120 after cutting. In some embodiments, the normal temperature and pressure conductive adhesive is PVDF-HFP.

In some embodiments, referring to FIG. 7, the separator unwinding mechanism 300 is arranged downstream of the first glue spraying mechanism 200. In the case that two separators 120 are to be provided, the separator unwinding mechanism 300 includes a first separator unwinding roll, a second separator unwinding roll, and a cutting mechanism. The first separator unwinding roll and the second separator unwinding roll are wound with separator material, and the first membrane unwinding roll is configured to receive the separator material, which is to be cut into a first separator 121 by the cutting mechanism. The second separator unwinding roll is configured to receive the separator material, which is to be cut into a second separator 122 by the cutting mechanism. The first separator unwinding roll is located on a side of the first electrode sheet 110, and the second separator unwinding roll is located on the other side of the first electrode sheet 110. During the unwinding process of the first separator 121 and the second separator 122, the first separator 121 and the second separator 122 are respectively bonded and connected to the first electrode sheet 110.

In some embodiments, referring to FIG. 7, the first composite mechanism 400 is arranged downstream of the separator unwinding mechanism 300. The first composite mechanism 400 includes two first pressure rollers 410 arranged opposite to each other. The first pressure roller 410 does not need to be heated, and compared with composite rollers, it has a simple structure and is easy to maintain. The first electrode sheet 110 and the separator 120 that are bonded to each other are composited into a first composite tape after passing through the first pressure rollers 410. The pressure applied by the first pressure rollers 410 is P1, where 0.05T ≤ P1 ≤ 0.1T. The value of P1 may be 0.05T, 0.06T, 0.75T, 0.08T, 0.95T, 0.1T or other unspecified values. The first pressure rollers 410 apply a relatively small pressure on the separator 120 and the first electrode sheet 110, which reduces the probability of damaging the conductive particles in the normal temperature and pressure conductive adhesive due to excessive pressure, and ensures the conductivity of the normal temperature and pressure conductive adhesive.

In some embodiments, referring to FIG. 7, the second electrode sheet preparation unit 500 is arranged downstream of the first composite mechanism 400. The second electrode sheet preparation unit 500 includes unwinding mechanisms and cutting mechanisms, and an electrode sheet material is wound on each unwinding mechanism. In the case that the second electrode sheet 130 is a positive electrode sheet, the corresponding unwinding mechanisms are wound with a positive electrode material, and in the case that the second electrode sheet 130 is a negative electrode sheet, the corresponding unwinding mechanisms are wound with a negative electrode material. The cutting mechanisms are each configured to cut the material into a plurality of second electrode sheets 130. The second electrode sheet preparation unit 500 is provided with two unwinding mechanisms and two cutting mechanisms, where one of the unwinding mechanisms and one of the cutting mechanisms are located on a side of the first electrode sheet 110, the other one of the unwinding mechanisms and the other one of the cutting mechanisms are located on the other side of the first electrode sheet 110.

In some embodiments, referring to FIG. 7, two second glue spraying mechanisms 600 are arranged downstream of the second electrode sheet preparation unit 500. One of the second glue spraying mechanisms 600 is arranged on a side of the first electrode sheet 110, and the other one of the second glue spraying mechanisms 600 is arranged on the other side of the first electrode sheet 110. One of the second glue spraying mechanisms 600 is configured to spray a normal temperature and pressure conductive adhesive on the surface of the second electrode sheet 130 on the first separator 121. The other one of the second glue spraying mechanisms 600 is configured to spray a normal temperature and pressure conductive adhesive on the surface of the second electrode sheet 130 on the second separator 122. In some embodiments, the normal temperature and pressure conductive adhesive is PVDF-HFP.

In some embodiments, referring to FIG. 7, the second composite mechanism 700 is arranged downstream of the second glue spraying mechanism 600. The second composite mechanism 700 includes two second pressure rollers 710 disposed opposite to each other. The first composite tape and the second electrode sheet 130 are composited to form a battery cell structure after passing through the second pressure rollers 710. The pressure applied by the second pressure rollers 710 is P2, where 0.05T ≤ P2 ≤ 0.1T. The value of P2 may be 0.05T, 0.06T, 0.75T, 0.08T, 0.95T, 0.1T or other unspecified values. The pressure applied by the second pressure rollers 710 on the second electrode sheet 130 and the first composite tape is relatively small, which reduces the probability of damage to the conductive particles in the normal temperature and pressure conductive adhesive due to excessive pressure, and ensures the conductivity of the normal temperature and pressure conductive adhesive.

In some embodiments, the folding mechanism 800 is arranged downstream of the second composite mechanism 700, and the folding mechanism 800 is configured to fold the battery cell structure used to from a laminated battery cell. For example, the folding mechanism 800 is configured to fold the battery cell structure to have a Z-shape.

In some embodiments of the present application, the first glue spraying mechanism 200 is configured to spray a normal temperature and pressure conductive adhesive on a surface of the first electrode sheet 110, and the second glue spraying mechanism 600 is configured to spray a normal temperature and pressure conductive adhesive on a surface of the second electrode sheet 130. The first composite mechanism 400 is configured to apply a pressure P1 to the first electrode sheet 110 and the separator 120, and the second composite mechanism 700 is configured to apply a pressure P2 to the first electrode sheet 110, the separator 120, and the second electrode sheet 130. The first composite mechanism 400 and the second composite mechanism 700 have pressure rollers, and no heating is needed, and the normal temperature and pressure conductive adhesive is not affected by high temperature and high pressure. While ensuring the bonding effect of the separator 120 with the negative electrode sheet and the positive electrode sheet, the conductive performance of the normal temperature and pressure conductive adhesive is guaranteed, and the performance of the battery is good.

In some embodiments, the first electrode sheet 110 is a negative electrode sheet, and the second electrode sheet 130 is a positive electrode sheet. The first electrode sheet preparation unit 100 can prepare a single-structure negative electrode sheet, or a continuous-structure negative electrode sheet. The single-structure negative electrode sheet refers to a negative electrode sheet corresponding to one positive electrode sheet. The continuous-structure negative electrode sheet refers to a negative electrode sheet corresponding to multiple positive electrode sheets.

In some embodiments, referring to FIG. 7, two first glue spraying mechanisms 200 are provided, and the two first glue spraying mechanisms 200 are respectively provided to spray the normal temperature and pressure conductive adhesive to the two side surfaces of the first electrode sheet 110. Exemplarily, each first glue spraying mechanism 200 is provided on a side of the first electrode sheet 110, and the two first glue spraying mechanisms 200 simultaneously spray the normal temperature and pressure conductive adhesive to the two side surfaces of the cut first electrode sheet 110. In some embodiments, the normal temperature and pressure conductive adhesive is PVDF-HFP.

For example, referring to FIG 7, two layers of separators 120 are provided, which are a first separator 121 and a second separator 122. A side of the first electrode sheet 110 is fully adhered to the first separator 121, and the other side is fully adhered to the second separator 122. Therefore, both sides of the first electrode sheet 110 need to be sprayed with a normal temperature and pressure conductive adhesive. Two first glue spraying mechanisms 200 are provided to facilitate the glue spraying operation.

In some embodiments, referring to FIG. 7, two second glue spraying mechanisms 600 are provided, and the two second glue spraying mechanisms 600 are each provided to spray the normal temperature and pressure conductive adhesive to a surface on a side of the second electrode sheet 130 that is located on a side of the separator 120. Exemplarily, one second glue spraying mechanism 600 is provided on a side of the first electrode sheet 110, and the other second glue spraying mechanism 600 is provided on the other side of the first electrode sheet 110. One second glue spraying mechanism 600 is provided to spray the normal temperature and pressure conductive adhesive to a surface of the second electrode sheet 130 on the side of the first separator 121.

In other embodiments, one first glue spraying mechanism 200 and one second glue spraying mechanism 600 are provided. The first glue spraying mechanism 200 is provided to spray a normal temperature and pressure conductive adhesive onto a surface of the first electrode sheet 110 to be adhered to the separator 120. The second glue spraying mechanism 600 is provided to spray a normal temperature and pressure conductive adhesive onto a surface of the second electrode sheet 130 to be adhered to the separator 120.

Exemplarily, one separator 120 is provided, the first electrode sheet 110 is bonded to a side of the separators 120 by a normal temperature and pressure conductive adhesive, and the second electrode sheet 130 is bonded to the other side of the separator 120 by a temperature and pressure conductive adhesive. Along the length direction of the separator 120, the first electrode sheets 110 and the second electrode sheets 130 are alternately provided.

In some embodiments, the spraying area of the normal temperature and pressure conductive adhesive on the first electrode sheet 110 is S1, where 0.8A1 ≤ S1 ≤ A1, and the A1 is the area of one side surface of the first electrode sheet 110. The value of S1 can be 0.8A1, 0.9A1, A1 or other unspecified values.

In the embodiment of the present application, the glue spraying area of the first electrode sheet 110 occupies 80% or more of the surface of one side of the first electrode sheet 110. The glue spraying area is relatively large, the first electrode sheet 110 and the separator 120 are firmly bonded, and the conductivity of the normal temperature and pressure conductive adhesive is not affected.

In some embodiments, the spraying area of the normal temperature and pressure conductive adhesive on the second electrode sheet 130 is S2, where 0.8A2 ≤ S2 ≤ A2, and the A2 is the area of one side surface of the second electrode sheet 130. The value of S2 can be 0.8A2, 0.9A2, A2 or other unspecified values.

In some embodiments of the present application, the glue spraying area of the second electrode sheet 130 occupies 80% or more of the surface of one side of the second electrode sheet 130. The glue spraying area is relatively large, the second electrode sheet 130 and the separator 120 are firmly bonded, and the conductivity of the normal temperature and pressure conductive adhesive is not affected.

In some embodiments, the thickness of the normal temperature and pressure conductive adhesive sprayed on the first electrode sheet 110 is D1, where 1 µm ≤ D1 ≤ 2 µm. The value of D1 may be 1 µm, 1.2 µm, 1.5 µm, 1.7 µm, 1.8 µm, 1.9 µm, 2 µm or other unspecified values.

In some embodiments, the thickness of the normal temperature and pressure conductive adhesive sprayed on the second electrode sheet 130 is D2, where 1 µm ≤ D 2 ≤ 2 µm. The value of D2 may be 1 µm, 1.2 µm, 1.5 µm, 1.7 µm, 1.8 µm, 1.9 µm, 2 µm or other unspecified values. The value of D2 may be the same as or different from the value of D1.

The spraying thickness of the normal temperature and pressure conductive adhesive on the first electrode sheet 110 and the second electrode sheet 130 is moderate, which meets the requirements of bonding, conductivity and other performances while reducing the probability of adhesive overflow after passing through the pressure roller due to excessive spraying of the normal temperature and pressure conductive adhesive.

The present application also provides a preparation method of a laminated battery cell, comprising the following steps:
S1, preparing one or more first electrode sheets 110 and one or more second electrode sheets 130;
S2, spraying a normal temperature and pressure conductive adhesive on both sides of each of the one or more first electrode sheets 110 to compositely connect the one or more first electrode sheets 110 with two layers of the separators 120, spraying a normal temperature and pressure conductive adhesive on a side of each of the one or more the second electrode sheet 130 to compositely connect the one or more second electrode sheets 130 with a side of the separators 120 facing away from the one or more first electrode sheets 110, and preparing a battery cell structure;
S3, folding the battery cell structure to prepare a laminated battery cell.

In the embodiment of the present application, the one or more first electrode sheets 110 and the one or more second electrode sheets 130 can be prepared simultaneously or separately, and the preparation of the one or more first electrode sheets 110 and the one or more second electrode sheets 130 is completed before the one or more first electrode sheets 110 and the one or more second electrode sheets 130 are bonded to the separators 120.

In some embodiments, the normal temperature and normal pressure conductive adhesive is PVDF-HFP.

## Claims

1. A laminated battery cell (10), prepared by folding a battery cell structure, wherein the battery cell structure comprises:
one or more first electrode sheets (110);
one or more separators (120), wherein the one or more first electrode sheets (110) are arranged on a side of the one or more separators (120), and the one or more first electrode sheets (110) are connected to the one or more separators (120) by a normal temperature and pressure conductive adhesive; and
one or more second electrode sheets (130), arranged on a further side of the one or more separators (120) facing away from the one or more first electrode sheets (110), wherein the one or more second electrode sheets (130) are connected to the one or more separators (120) by the normal temperature and pressure conductive adhesive.

2. The laminated battery cell (10) according to claim 1, wherein the separators (120) are provided in a number of two and the two separators are a first separator (121) and a second separator (122) respectively; the one or more first electrode sheets (110) are located between the first separator (121) and the second separator (122); two sides of the one or more first electrode sheets (110) are respectively connected to the first separator (121) and the second separator (122) by the normal temperature and pressure conductive adhesive; the second electrode sheets (130) are provided on a side of the first separator (121) facing away from the one or more first electrode sheets (110) and a side of the second separator (122) facing away from the one or more first electrode sheets (110); and the second electrode sheets (130) are alternately provided on the first separator (121) and the second separator (122) along a length direction of the separators (120).

3. The laminated battery cell (10) according to claim 2, wherein the one or more first electrode sheets (110) are one or more negative electrode sheets, and the second electrode sheets (130) are positive electrode sheets.

4. The laminated battery cell (10) according to claim 3, wherein the one or more negative electrode sheets are as a continuous electrode sheet corresponding to a plurality of the positive electrode sheets.

5. The laminated battery cell (10) according to claim 1, wherein the one separator (120) is provided, the one or more first electrode sheets (110) and the one more second electrode sheets (130) are alternately arranged on both sides of the separator (120), the one or more first electrode sheets (110) are located on one of the sides of the separator (120) so that a side surface of the one or more first electrode sheet (110) is connected to a side surface of the separator (120) by the normal temperature and pressure conductive adhesive, and the one or more second electrode sheets (130) are located on the other of the sides of the separator (120) so that a side surface of each of the one or more second electrode sheets (130) is connected to a further side surface of the separator (120) by the normal temperature and pressure conductive adhesive.

6. The laminated battery cell (10) according to any one of claims 1 to 5, wherein the normal temperature and pressure conductive adhesive comprises PVDF-HFP.

7. The laminated battery cell (10) according to any one of claims 1 to 6, wherein a first tab extending out of the one or more separators (120) are provided on the one or more of first electrode sheets (110).

8. The laminated battery cell (10) according to any one of claims 1 to 7, wherein a second tab extending out of the one or more separators (120) are provided on the one or more second electrode sheets (130).

9. A preparation device of a laminated battery cell, comprising:
a first electrode sheet preparation unit (100), configured to prepare a first electrode sheet (110);
one or more first glue spraying mechanisms (200), arranged downstream of the first electrode sheet preparation unit (100), and configured to spray a normal temperature and pressure conductive adhesive onto a surface of the first electrode sheet (110);
a separator unwinding mechanism (300), arranged downstream of the one or more first glue spraying mechanisms (200), and configured to convey a separator (120);
a first composite mechanism (400), arranged downstream of the separator unwinding mechanism (300), and comprising two first pressure rollers (410) arranged opposite to each other; wherein a first composite tape is prepared after the first electrode sheet (110) and the separator (120) pass through between the first pressure rollers (410), and a pressure applied by the first pressure rollers (410) is P1, where 0.05T ≤ P1 ≤ 0.1T;
a second electrode sheet preparation unit (500), arranged downstream of the first composite mechanism (400), and configured to prepare a second electrode sheet (130);
one or more second glue spraying mechanisms (600), arranged downstream of the second electrode sheet preparation unit (500), and configured to spray the normal temperature and pressure conductive adhesive onto a surface of the second electrode sheet (130) to be connected to the first composite tape;
a second composite mechanism (700), arranged downstream of the one or more second glue spraying mechanisms (600), and comprising two second pressure rollers (710) arranged opposite to each other; wherein a battery cell structure is formed after the first composite tape and the second electrode sheet (130) pass through between the second pressure rollers (710), and a pressure applied by the second pressure rollers (710) is P2, where 0.05T ≤ P2 ≤ 0.1T; and
a folding mechanism (800), configured to fold the battery cell structure to prepare the laminated battery cell (10).

10. The preparation device of the laminated battery cell according to claim 9, wherein the first glue spraying mechanisms (200) are provided in a number of two, and the two glue spraying mechanisms are respectively configured to spray the normal temperature and pressure conductive adhesive onto both side surfaces of the first electrode sheet (110).

11. The preparation device of the laminated battery cell according to claim 9 or 10, wherein the second glue spraying mechanisms (600) are provided in a number of two, and the two second glue spraying mechanisms are respectively configured to spray the normal temperature and pressure conductive adhesive onto one surface of the second electrode sheet (130) arranged on both side surfaces of the separator (120).

12. The preparation device of the laminated battery cell according to any one of claims 9 to 11, wherein a spraying area of the normal temperature and pressure conductive adhesive on the first electrode sheet (110) is S1, where 0.8A1 ≤ S1 ≤ A1, the A1 is an area of one side surface of the first electrode sheet (110); or
wherein a spraying area of the normal temperature and pressure conductive adhesive on the second electrode sheet (130) is S2, where 0.8A2 ≤ S2 ≤ A2, and the A2 is an area of one side surface of the second electrode sheet (130).

13. The preparation device of the laminated battery cell according to any one of claims 9 to 12, wherein a spraying thickness of the normal temperature and pressure conductive adhesive on the first electrode sheet (110) is D1, where 1 µm ≤ D1 ≤ 2 µm.

14. The preparation device of the laminated battery cell according to any one of claims 9 to 13, wherein a spraying thickness of the normal temperature and pressure conductive adhesive on the second electrode sheet (130) is D2, where 1 µm ≤ D2 ≤ 2 µm.

15. The preparation device of the laminated battery cell according to any one of claims 9 to 14, wherein the normal temperature and pressure conductive adhesive comprises PVDF-HFP.

16. A preparation method of a laminated battery cell, comprising steps of:
preparing one or more first electrode sheets (110) and one or more second electrode sheets (130);
spraying a normal temperature and pressure conductive adhesive on both sides of the one or more first electrode sheets (110), compositely connecting the one or more first electrode sheets (110) to two separators (120), spraying the normal temperature and pressure conductive adhesive on a side surface of the one or more second electrode sheets (130), compositely connecting the one or more second electrode sheets (130) to a side of the separators (120) facing away from the one or more first electrode sheets (110), to prepare and obtain a battery cell structure; and
folding the battery cell structure to prepare a laminated battery cell (10).

17. The preparation method of the laminated battery cell according to claim 16, wherein the normal temperature and pressure conductive adhesive comprises PVDF-HFP.
